Europäisches Patentamt

European Patent Office

Office européen des brevets

(11) Veröffentlichungsnummer : **0 007 035**
**B1**

(19)

(12) **EUROPÄISCHE PATENTSCHRIFT**

(45) Veröffentlichungstag der Patentschrift :
23.12.81

(51) Int. Cl.³ : **C 08 F 8/20, C 08 F 8/34,
C 08 F 10/02**

(21) Anmeldenummer : 79102130.6

(22) Anmeldetag : 27.06.79

(54) **Verfahren zur Erhöhung des Molgewichtes von chloriertem Polyethylen und/oder chloriertem Ethylen-Vinylacetat-copolymerisat.**

(30) Priorität : 12.07.78 DE 2830556

(43) Veröffentlichungstag der Anmeldung :
23.01.80 (Patentblatt 80/02)

(45) Bekanntmachung des Hinweises auf die Patenterteilung : 23.12.81 Patentblatt 81/51

(84) Benannte Vertragsstaaten :
BE DE FR GB IT NL

(56) Entgegenhaltungen :
DE - A - 1 811 472
FR - A - 1 566 415

(73) Patentinhaber : BAYER AG
Zentralbereich Patente, Marken und Lizenzen
D-5090 Leverkusen 1, Bayerwerk (DE)

(72) Erfinder : Beck, Manfred, Dr.
Auf dem Krahwinkel 5
D-5074 Odenthal-Hahnenberg (DE)
Erfinder : Göbel, Wilhelm, Dr.
Max-Beckmann-Strasse 37
D-5090 Leverkusen 1 (DE)

# 0 007 035

## Verfahren zur Erhöhung des Molgewichtes von chlorierten Polyethylen und/oder chloriertem Ethylen-Vinylacetat-copolymerisat

Die Erfindung betrifft ein Verfahren zur Erhöhung des Molgewichtes von chlorierten Polyethylen und/oder chlorierten Ethylen-Vinylacetatcopolymerisat durch Zugabe von Dischwefeldichlorid vor oder während der Chlorierungsreaktion.

Die Chlorierung von Polyolefinen in Lösung erfordert aufgrund von Löslichkeitsproblemen den Einsatz von relativ niedermolekularen Polyolefinen. Die dabei erhaltenen Produkte weisen daher häufig für technische Anwendungen zu niedrige Viskositäten (gemessen als Mooneywert) auf. Die Peroxid-Vernetzung solcher chlorierten Polyethylene führt zu Vulkanisaten mit unbefriedigenden physikalischen Werten.

Es besteht daher das Bedürfnis, in der Technik chlorierte Elastomere zur Verfügung zu haben, die ausreichend hohe Mooneyviskositäten aufweisen und deren Vulkanisate zufriedenstellende physikalische Eigenschaften besitzten.

Es wurde nun gefunden, daß man diese Nachteile durch Zugabe von Dischwefeldichlorid vor oder während der Chlorierung der entsprechenden Elastomeren beheben kann.

Möglich ist auch der Zusatz von Substanzen, die während der Chlorierung die genannte Verbindung durch Reaktion mit dem anwesenden Chlor zu bilden vermögen. Dies sind beispielsweise Schwefel oder Schwefelwasserstoff.

Durch den Zeitpunkt der Zugabe von Dischwefeldichlorid als auch durch deren Menge kann man die Molgewichtserhöhung der chlorhaltigen Elastomere steuern. Bei einer gegebenen Menge an Dischwefeldichlorid erhöht sich der Effekt um so mehr, je früher der Zusatz erfolgt. Die obere Mengenbegrenzung ist gegeben, wenn vernetzte Polymere entstehen. Im allgemeinen liegt diese Grenze bei 5 Gewichtsteilen Dischwefeldichlorid je 100 Gewichtsteile Polymer. Mengen unter 0,01 Gewichtsteilen sind meist unwirksam.

Die Chlorierung der Elastomere wird normalerweise in Lösung durchgeführt. Man kann diese aber auch in Suspensionen oder im Wirbelbett ohne Verwendung eines Lösungs- bzw. Suspensionsmittels ausführen. Im letzteren Fall wird die Schwefelverbindung entweder vorher dem Elastomeren zugemischt oder mit dem Chlorstrom zugefügt.

Als Lösungs- bzw. Suspensionsmittel kommen beispielsweise halogenierte Kohlenwasserstoffe wie Tetra-Chlorkohlenstoff, Chloroform, Methylenchlorid, Tetrachlorethan und/oder Chlorbenzol in Frage.

Als Chlorierungsmittel können Chlor oder Chlor abspaltende Verbindungen eingesetzt werden. Bevorzugt gelangt Chlor zur Anwendung.

Die eingesetzte Menge richtet sich nach dem gewünschten Chlorierungsgrad. Sie beträgt pro 100 Gewichtsteile zu chlorierendem Elastomer 1 bis 300 Gewichtsteile, bevorzugt 30 bis 150 Gewichtsteile.

Die Temperatur der Chlorierungsreaktion in Gegenwart von Dischwefeldichlorid kann in weiten Grenzen variiert werden und richtet sich im allgemeinen nach den Chlorierungsbedingungen. Vorzugsweise arbeitet man im Bereich von 50 °C bis 140 °C.

Das Verfahren ist sowohl anwendbar auf Ethylenhomopolymere mit hoher als auch niedriger Dichte wie auf Copolymere aus Ethylen und Vinylacetat. Der Vinylacetatgehalt solcher Copolymeren kann bis zu 80 Gew.-% betragen. Bevorzugt sind Produkte mit bis zu 50 Gew.-%, besonders bevorzugt solche mit bis zu 20 Gew.-% Vinylacetat.. Wird während der Chlorierung außer Chlor eine weitere reaktionsfähige Komponente zugegeben, wie z.B. Schwefeldioxid oder Sulfurylchlorid, um beispielsweise chlorsulfonierte chlorierte Polyethylen zu erhalten, so kann auch hierbei durch Zugabe von Dischwefeldichlorid eine Erhöhung des Molgewichtes der Polymeren herbeigeführt werden.

Das chlorierte Polymer kann nach bekannten Verfahren isoliert werden. Beispielsweise durch Fällen mit Methanol oder durch Einleiten von Wasserdampf in die Lösung bzw. durch gleichzeitiges Einleiten der Polymerlösung und Wasserdampf in heißes Wasser.

Die Trocknung kann nach den in der Kautschuk-Technologie üblichen Methoden erfolgen.

Die erfindungsgemäß hergestellten Polymere werden nach Vernetzung, beispielsweise mit Peroxiden, zur Herstellung von hochwertigen technischen Gummiwaren eingesetzt, beispielsweise zur Herstellung von Kabelmänteln und Schläuchen.

Das erfindungsgemäße Verfahren wird durch die nachstehenden Beispiele näher erläutert.

## Beispiel 1

In 4 800 g Tetrachlorkohlenstoff werden 360 g Äthylencopolymer mit einem Vinylacetatgehalt an 3,5 % (MI (DIN 53 735) 0,4 ; d = 0,963 ; ($\eta$) = 0,95 (Dichlorbenzol 127 °C)) in der Siedehitze gelöst. Dann leitet man stündlich 64 g Chlor ein. Insgesamt werden innerhalb von 10 Stunden 640 g Chlor eingeleitet. Nach 9 Stunden tropft man, ohne die Chlorierung zu unterbrechen, innerhalb von 15 Minuten eine Lösung von 3,6 g Dischwefeldichlorid in 50 ml Tetrachlorkohlenstoff zu und chloriert zu Ende. Das chlorierte Polyäthylen wird nach Zugabe von 3,3 g basischem Pb-phthalat durch Fällen mit Äthanol isoliert und im Vakuum bei 60 °C getrocknet. Der Chlorgehalt betrug 35,1 %.

2

## Beispiel 2

Analog Beispiel 1 wurde ein chloriertes Polyäthylen hergestellt, mit dem Unterschied, daß die angegebene Menge an $S_2Cl_2$ bereits nach 5 Stunden Chlorierung zugegeben wurde. Das erhaltene Produkt enthielt 34,2 % Chlor.

## Vergleichsbeispiel 1

Wie in Beispiel 1 wurde das Äthylenpolymer chloriert, jedoch ohne Zusatz von $S_2Cl_2$. Chlorgehalt : 34,5 %.

## Kautschuktechnologische Untersuchung

Die gemäß Beispiel 1, 2 und dem Vergleichsbeispiel hergestellten chlorierten Äthylencopolymere wurden nach folgender Rezeptur gemischt und dann 20 Minuten bei 170 °C vulkanisiert :

### Prüfmischung

| | |
|---|---|
| Chloriertes PE Copolymer | 100 Gew.-Tle |
| basisches Pb-phthalat | 5 Gew.-Tle |
| epoxiertes Sojaöl | 10 Gew.-Tle |
| Trimethyldihydrochinolin | 0,1 Gew.-Tle |
| Ruß | 50 Gew.-Tle |
| Bis(tert.-butylperoxiddiisopropyl)-benzol | 5 Gew.-Tle |
| Triallylcyanurat | 1 Gew.-Tle |

In nachstehender Tabelle sind die Prüfungsergebnisse zusammengestellt.

| | Beispiel 1 | Beispiel 2 | Vergleich 1 |
|---|---|---|---|
| Roh-Kautschuk | | | |
| Löslichkeit in Dichlorbenzol | teilweise | nicht lösl. | löslich |
| ML-4 (100 °C) (ME) | 100 | 175 | 62 |
| Defo-Härte (DH) | 2 300 | 4 750 | 2 050 |
| Defo-Elastizität (DE) | 50 | 56 | 38 |
| Vulkanisat | | | |
| Reißfestigkeit (MPa) | 15,2 | 15,8 | 14,0 |
| Dehnung (%) | 310 | 280 | 345 |
| Spannung bei 100/300 % Dehnung (MPa) | 2.6/12.2 | 3.5/- | 3.1/12.5 |
| Härte (Shore A) 20/70 °C | 64/52 | 65/58 | 68/51 |
| $\Delta H$ | 12 | 7 | 17 |

Bei verbesserter Reißfestigkeit ist insbesondere die verbesserte Härtedifferenz $\Delta H$ zwischen 20 und 70 °C feststellbar, welche beim Vergleich 17 Shore A-Einheiten beträgt und bei den Beispielen 1 bzw. 2 sich auf 12 bzw. 7 Einheiten erniedrigt.

## Vergleichsbeispiel 2

Dieses Beispiel zeigt die Nichtwirksamkeit von $S_2Cl_2$ auf chlorierte Polyäthylene, (CM) wenn man den Zusatz nach der Chlorierung ausführt. Man löst hierzu je 200 g CM in 1 800 g Tetrachlorkohlenstoff, gibt 2 g $S_2Cl_2$ zu und erhitzt 2 Stunden am Rückfluß. In Tabelle 1 sind die Ergebnisse zusammengefaßt. Man stellt fest, daß die Mooney-Viskositäten der behandelten Produkte deutlich niedriger liegen als die der Ausgangsprodukte.

### Tabelle 1

| Polyäthylentyp | Chlorgehalt | ML-4 (100 °C) vorher | ML-4 (100 °C) nach $S_2Cl_2$-Behandlung |
|---|---|---|---|
| Äthylenhomopolymer-d = 0,919 | 38,5 % | 41 | 16 |
| Äthylenvinylacetat-copolymer mit 3,5 % VA-Gehalt | 35,2 % | 73 | 32 |

# 0 007 035

Beispiele 3 bis 5

In 6 l Tetrachlorkohlenstoff werden 720 g granuliertes Copolymer aus Äthylen und Vinylacetat (d = 0,926, MI = 0,25, VA-Gehalt 3,5 %) bei Siedetemperatur aufgelöst. Im Verlauf von 8 Stunden leitet man 920 g Chlor ein und tropft im selben Zeitraum eine Lösung von 4,04 g Benzoylperoxid in 100 ml $CCl_4$ zu. Nach 5 Stunden Chlorierung werden 4,3 l (7,2 g) Dischwefeldichlorid (1 phr) in 20 ml $CCl_4$ gelöst zugegeben und dann wird zu Ende Chloriert. Der Chlorgehalt beträgt 35,3 % (= Beispiel 3).

Analog Beispiel 3 wird chloriert, mit dem Unterschied, daß anstelle von 7,2 g nur 3,6 g $S_2Cl_2$ (0,5 phr) zugegeben werden. Chlorgehalt 35,4 % (= Beispiel 4).

Im Beispiel 5 wird die Chlorierung ohne Zusatz von $S_2Cl_2$ ausgeführt.

Nachstehende Tabelle gibt den Einfluß auf die Löslichkeit und die Viskosität des Polymeren wieder.

| Beispiel | Löslichkeit in Dichlor-Benzol | MI-4 (100 °C) (ME) | Defo-Härte (DH) | Defo-Elastizität (DE) |
|---|---|---|---|---|
| 3 | unlöslich | 200 | 6 000 | 60 |
| 4 | nur teilw. lösl. | 158 | 4 450 | 58 |
| 5 (Vergleich) | Löslich | 90 | 2 250 | 44 |

Beispiel 6 bis 7

Dieses Beispiel zeigt die Wirksamkeit von $S_2Cl_2$ bei der Chlorierung eines Homopolyäthylens. Analog Beispiel 3 wurde ein Homopolymer (d = 0,919 ; MI (DIN 53 735) 7,0) chloriert und nach 5 Stunden 0,5 phr $S_2Cl_2$ zugeführt. Zum Vergleich (Beispiel 7) chlorierte man das gleiche Polyäthylen ohne Zusatz von Dischwefelchlorid.

| Beispiel | % Cl | $S_2Cl_2$ phr | ML 4' (100°) | Defo-Härte | Defo-Elastizität |
|---|---|---|---|---|---|
| 6 | 35,3 | 0,5 | 110 | 2 300 | 53 |
| 7 (Vergleich) | 36,2 | 0 | 40 | 600 | 21 |

Beispiel 8

360 g Äthylenvinylacetatcopolymer (Vinylacetatgehalt 28 %, MI (ASTMD-1 238 modif. 6 g/10 Min) wurden unter Erhitzen in 4 800 g Tetrachlorkohlenstoff gelöst. Im Verlauf von 6 Stunden leitete man 400 g Chlor in die siedende Lösung ein. Nach 5 Stunden Chlorieren wurde eine Probe entnommen und zu der Lösung 4 g $S_2Cl_2$ in 20 ml $CCl_4$ gelöst zugegeben und dann zu Ende chloriert. Der Chlorgehalt zum Zeitpunkt der $S_2Cl_2$-Zugabe lag bei 19,2 %, der L-Wert des Produktes (Viskosität $\eta$ spezif./c für c = 5 g/l. in Dichlorbenzol, 100 °C) bei 96 cm$^3$/g. Das isolierte Produkt am Ende der Reaktion enthielt 24,6 % Cl und besaß einen L-Wert von 117. Eine analog hergestellte Probe ohne $S_2Cl_2$-Zusatz enthielt ebenfalls 24,2 % Cl und hatte einen L-Wert von 89.

Beispiel 9

In 2 400 g Tetrachlorkohlenstoff wurden 180 g Polyäthylen gelöst. Im Verlauf von 6 Stunden leitete man 160 g Chlor ein. Nachdem 90 % der Chlormenge eingeleitet waren, wurden zusätzlich 16 g Schwefelwasserstoff eingeleitet. Der Chlorgehalt betrug 32,0 %. Das Produkt war kautschukelastisch, löste sich aber nicht mehr in Dichlorbenzol. Ohne Zusatz von $H_2S$ chloriertes Polyäthylen war in Dichlorbenzol voll löslich.

## Ansprüche

1. Verfahren zur Erhöhung des Molgewichtes von chloriertem Polyethylen und Ethylen-Vinylacetat-Copolymerisat ; dadurch gekennzeichnet, daß vor oder während der Chlorierungsreaktion, die bei Temperaturen von 50° bis 140 °C durchgeführt wird, Dischwefeldichlorid in Mengen von 0,01 bis 5 Gew.-Tln pro 100 Teile Elastomer zugegeben wird.

2. Verfahren nach Anspruch 1, dadurch gekennzeichnet, daß als Chlorierungsmittel Chlor und/oder

4

Chlor abspaltende Verbindungen in Mengen von 1 bis 300 Gewichtsteilen pro 100 Gewichtsteile im chlorierenden Elastomer eingesetzt werden.

3. Verfahren nach Anspruch 1 und 2, dadurch gekennzeichnet, daß als Chlorierungsmittel Chlor und/oder Chlor abspaltende Verbindungen in Mengen von 30 bis 150 Gew.-Tln pro 100 Gewichtsteile im chlorierenden Elastomer eingesetzt werden.

### Claims

1. Process for increasing the molecular weight of chlorinated polyethylene and ethylene/vinyl acetate copolymer; characterised in that disulphur dichloride is added before or during chlorination, which is carried out at temperatures of 50° to 140 °C, in quantities of from 0.01 to 5 parts by weight per 100 parts by weight of elastomer.

2. Process according to Claim 1, characterised in that chlorine and/or chlorine donors are used as the chlorinating agent in quantities of from 1 to 300 parts by weight per 100 parts by weight of elastomer to be chlorinated.

3. Process according to Claim 1 and 2, characterised in that chlorine and/or chlorine donors are used as the chlorinating agent in quantities of from 30 to 150 parts by weight per 100 parts by weight of elastomer to be chlorinated.

### Revendications

1. Procédé en vue d'élever le poids moléculaire du polyéthylène chloré et d'un copolymère chloré d'éthylène et d'acétate de vinyle, caractérisé en ce que, avant ou pendant la réaction de chloration qui est effectuée à des températures de 50 à 140 °C, on ajoute du dichlorure pyrosulfurique en quantités de 0,01 à 5 parties en poids par 100 parties d'élastomère.

2. Procédé suivant la revendication 1, caractérisé en ce que, comme agent(s) de chloration, on utilise le chlore et/ou des composés séparant du chlore, en quantités de 1 à 300 parties en poids par 100 parties en poids d'élastomère devant être chloré.

3. Procédé suivant les revendications 1 et 2, caractérisé en ce que, comme agent(s) de chloration, on utilise le chlore et/ou des composés séparant du chlore, en quantités de 30 à 150 parties en poids par 100 parties en poids d'élastomère devant être chloré.